Europäisches Patentamt

European Patent Office

Office européen des brevets

(19)

(11) EP 0 928 242 B1

(12) **EUROPEAN PATENT SPECIFICATION**

(45) Date of publication and mention
of the grant of the patent:
**18.04.2001 Bulletin 2001/16**

(51) Int Cl.[7]: **B29C 67/00**, B29C 41/12,
B05D 1/30

(21) Application number: **97904312.2**

(86) International application number:
**PCT/BE97/00015**

(22) Date of filing: **14.02.1997**

(87) International publication number:
**WO 97/29901 (21.08.1997 Gazette 1997/36)**

(54) **METHOD AND DEVICE FOR MAKING A THREE-DIMENSIONAL OBJECT FROM A HARDENABLE LIQUID MEDIUM**

VERFAHREN UND VORRICHTUNG ZUR HERSTELLUNG EINES DREIDIMENSIONALEN GEGENSTANDES AUS EINER HÄRTBAREN FLÜSSIGKEIT

PROCEDE ET DISPOSITIF POUR REALISER UN OBJET TRIDIMENSIONNEL A PARTIR D'UN MILIEU LIQUIDE DURCISSABLE

(84) Designated Contracting States:
**DE FR GB**

(30) Priority: **15.02.1996 BE 9600132**

(43) Date of publication of application:
**14.07.1999 Bulletin 1999/28**

(73) Proprietor: **MATERIALISE, NAAMLOZE VENNOOTSCHAP**
**3040 Huldenberg (BE)**

(72) Inventors:
• **RENAP, Kurt**
**B-2270 Herenthout (BE)**
• **VANCRAEN, Wilfried**
**B-3040 Huldenberg (BE)**

(74) Representative: **Donné, Eddy**
**Bureau M.F.J. Bockstael nv**
**Arenbergstraat 13**
**2000 Antwerpen (BE)**

(56) References cited:
**EP-A- 0 450 762**     **EP-A- 0 597 114**
**WO-A-91/12120**      **DE-A- 4 417 083**
**FR-A- 2 684 590**     **GB-A- 2 085 757**
**US-A- 5 238 497**

• **PATENT ABSTRACTS OF JAPAN vol. 013, no. 257 (M-837), 14 June 1989 & JP 01 061230 A (KUNIHIKO MORIYAMA), 8 March 1989,**
• **PATENT ABSTRACTS OF JAPAN vol. 018, no. 526 (M-1683), 5 October 1994 & JP 06 183132 A (MITSUBISHI PAPER MILLS LTD), 5 July 1994,**

**Description**

The present invention concerns a method for making a three-dimensional object from a hardenable liquid medium, whereby the object is built up layer per layer by each time providing a layer of liquid medium on a support and/or an already formed part of the object, inside a vessel containing liquid medium and subsequently hardening said layer according to a specific pattern before a subsequent layer is formed in the same manner, whereby the successive layers of liquid medium are provided through a slot in a casting head and thus in the form of a curtain which is moved in a relative manner in relation to the support or an already hardened layer.

The invention further relates to a device for making a three-dimensional object from a hardenable liquid medium according to the precharacterising part of claim 5.

Such methods are mainly used for making prototypes and such and are therefore usually referred to as rapid prototyping processes. The most frequently used process is stereolithography, whereby the liquid medium or resin of each layer is hardened by means of electromagnetic beams, for example one or several laser beams, which are computer-controlled. Thanks to the beams, the surface of the medium hardens according to a specific pattern, namely an x-y section of the object to be made.

A method of this kind is disclosed in EP-A-0.450.762. An abundance of liquid resin is casted by means of a casting head or dispenser on a support of already formed layer, this a quantity greater than required thickness for forming a new layer, after which the overspill of resin is scraped off with a scraper. Before hardening, a waiting time is usually required to obtain an even surface.

Before casting a new layer, the casting head is immersed in the vessel and in this way filled with liquid medium.

During casting the liquid medium flows under gravity out of the casting head in the form a curtain, but to avoid entrapment of air and interruptions and splitting of the curtain it is recommended that the distance between the casting head and the free surface of the liquid medium in the vessel is very low and preferably situated between 0,5 and lmm, while the speed of the casting head is limited to less than 2,5 cm per second and preferably to 1,22 cm per second.

It is clear that this known method is very time-consuming. Especially when building up small object, whereby only little time is required for the hardening, the required time for applying the layers of liquid resin determines the length of the entire process, which thus is very slow.

Moreover, the known method causes quite some problems when applying layers on certain geometries of objects, such as for example hollow or thin-walled objects. The scraper is often incapable of removing sufficient resin from the already formed part of the object in this case, so that after a number of layers, the scraper strikes against a hardened layer.

Another method is disclosed in DE-A-4.417.083. The support is sunk into the vessel to a depth equal to the thickness of a layer to be formed and liquid medium flows slowly over this layer. Then a quantity of liquid medium, which is pumped in the casting head, is sprayed by nozzles and scraped by rubber lips, wherby an overflow determines the level in the vessel. The liquid medium is thus not casted in the form of a curtain.

A similar method is disclosed in US-A-5.238.497. The support is also sunk into the vessel to a depth equal to the thickness of an layer to be formed. Due to the hight viscosity, a miniscus is formed around the upper face of the thus dipped support or already formed layer and liquid is sprayed by a nozzle on this upper face and hardened. More liquid medium than necessary will be sprayed and the excess of liquid medium is evacuated by overflow from the vessel.

WO-A-91/12120 discloses a similar method but liquid level is raised while the support is fixed. Also a meniscus is formed around a solidified previous layer and liquid medium is sprayed by a coating mechanism on said layer. The meniscus breaks and liquid layers above and around the previous layer merge. As the liquid medium raises the optics system for hardening has also to be raised each time a layer is formed.

EP-A-0.597.114 discloses a photohardening molding method according to which liquid medium is put on an already hardened layer, but this liquid medium is not dispensed in the form of a curtain but sucked into the clearance between a lower surface of a recoating device and the aleady hardened layer due to adhesion forces.

According to the method disclosed in FR-A-2.684.590, liquid medium flows through a slot in a moving carriage on an already hardened layer. The vessel consists of a fixed bottom and upstanding circumderential wall which supports the movable carriage and is raised each time a new layer has to be formed so that the carriage is situated at a distance of the previous layer equal to the thickness of the layer to be formed. The liquid medium does consequently no form a curtain at all. The quantity of liquid medium dispensed by the carriage is controlled by adjusting the width of the slot through which this liquid leaves the carriage.

The object of the invention a is to provide method and a device for making a three-dimensional object from a hardenable liquid medium which does not have the above-mentioned and other disadvantages and which thus is relatively fast.

This object is reached according to the invention by the method of claim 1 and by the device of claim 5. Particular embodiments of the invention are the subject of the dependent claims.

Curtain coating devices with a stationary casting head fed by a pump an known as such from GB-A-2.085.757 and JP-A-06-183132, but these devices are used to put a coating on a moving sheet.

In a particular form of embodiment of the invention the liquid medium in the form of a curtain is heated.

The liquid medium contained in the vessel may be cooled.

Blowing air on a vessel containing photo-setting resin is disclosed in JP-A-01-061230. Blowing takes place to prevent that a window above the thermosetting material does become cloudy. There is no casting head and no liquid medium is cast in layers.

The invention also concerns a device which is particularly suitable for the application of the method according to the invention.

The device for making a three-dimensional object from a hardenable liquid medium contains a vessel filled with a hardenable liquid medium and controllable means which can be provided on top of this vessel to make a layer of liquid medium harden according to a specific pattern, which means contain a casting head which is movable above the vessel and is provided with a slot at the bottom, and means to move said casting head in a relative manner over the surface of the medium contained in the vessel, characterized in that the casting head contains a pressure distribution chamber onto which the slot is connected, and in that the vessel has a movable bottom, and in that the device contains means to move this bottom and a separate reservoir with liquid medium which is connected to the casting head via a pipe.

Preferably, at least two guiding edges are provided on the casting head which extend downward near the ends of the slot so as to determine the shape of the curtain's edges.

Also between said guiding edges can be provided guiding elements on the casting head which point downward and which guide the curtain.

In order to better explain the characteristics of the invention, the following preferred embodiments of a method and device for making a three-dimensional object from a hardenable liquid medium is described as an example only without being limitative in any way, with reference to the accompanying drawings, in which:

figure 1 is a schematic representation of a device according to the invention in a first stage of the application of a liquid medium layer on a part of an already formed object;

figures 2 to 4 show a part of the device of figure 1, but in three successive stages of the application of the layer;

figure 5 shows a section according to line V-V in figure 2;

figure 6 shows a view in perspective of a practical embodiment of the part of the device according to figures 2 to 4;

figures 7 to 11 show longitudinal sections of four embodiments of the casting head of the device of figure 6, during the application of liquid medium.

According to the invention, an object 1 is built up by applying a selectively hardenable liquid medium 2 layer after layer, for example by applying a resin and by hardening it according to a specific pattern, whereby each layer is applied by casting liquid medium in the form of a stable curtain 3.

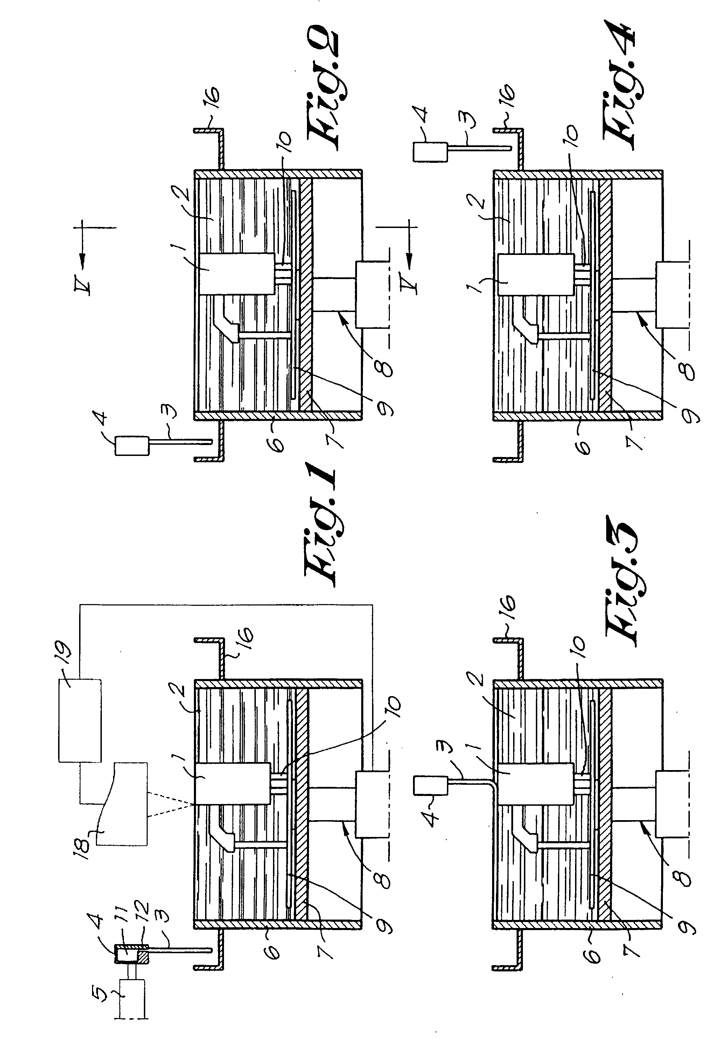

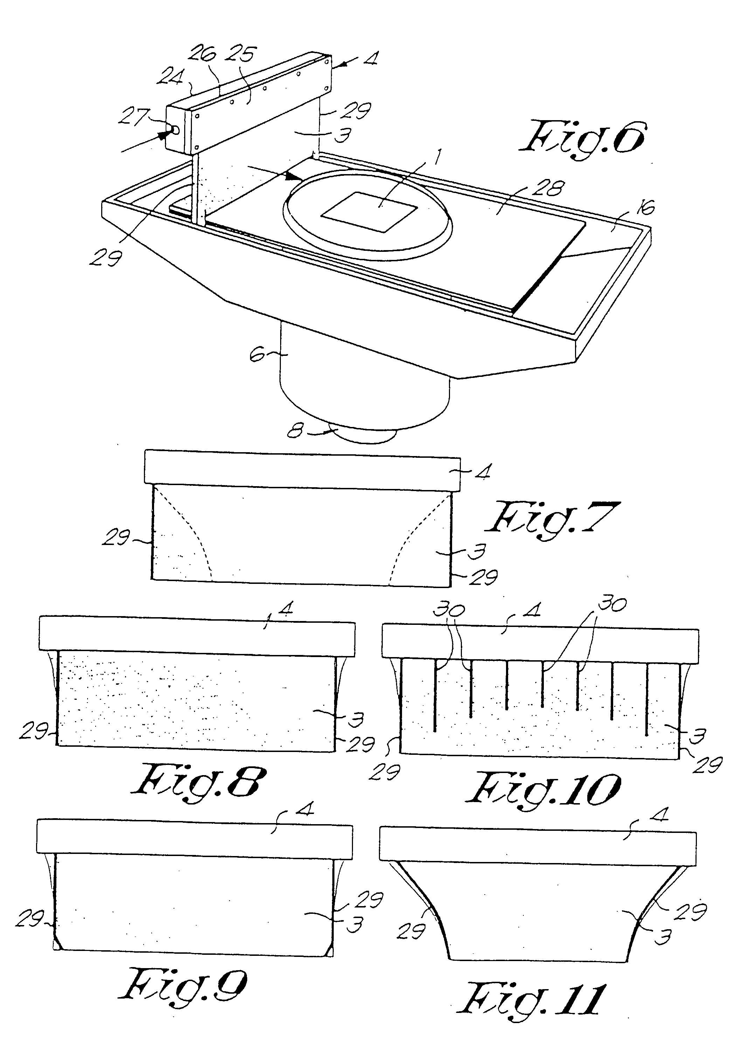

As is represented in the figures 1 and 5, which schematically represent a device for applying the method, this curtain 3 is cast by means of a casting head 4 which can be moved horizontally to and fro, for example by means of a piston mechanism 5, over a vessel 6 which is open at the top, which is filled with liquid medium 2 and in which the object 1 is formed.

The casting head 4 is stationary in the height, but the vessel 6 contains a movable part, which in the example consists of the bottom 7, to move the already formed part of the object 1 upward, layer per layer.

The device contains means 8 which for example consist of a piston mechanism to move the bottom 7 step by step.

On the bottom 7 is also provided a platform 9 and upon it a supporting frame 10 which is usually formed of hardened medium in the same manner as the object 1. The bottom 7, the platform 9 and the supporting frame 10 together form a support for the object 1 to be formed.

The casting head 4 contains an internal pressure distribution chamber 11 in which opens a slot 12 which opens into the bottom side of the casting head 4.

The device further contains a reservoir 13 for liquid medium. The casting head 4 is connected to this reservoir 13 by means of a pipe 14 in which is mounted a pump 15.

The top side of the vessel 6 is surrounded by a receptacle 16 which is connected to the reservoir 13 situated beneath it via a discharge pipe 17.

In order to harden the selectively hardenable medium layer per layer, a movable laser beam source 18 is mounted in a known manner above the vessel 6, which is moved by means that are not represented in figures 1 to 5 and that are controlled by a control unit 19 with built-in computer, such that the laser beam source 18 can describe a specific pattern and can also clear the space in front of the passage of the casting head 4.

There where a laser beam touches the surface of the liquid medium, this medium will harden.

Figure 1 represents an already formed and hardened part of the object in the vessel 6. The top surface of this part is situated at the height of the surface of the medium in the vessel 6.

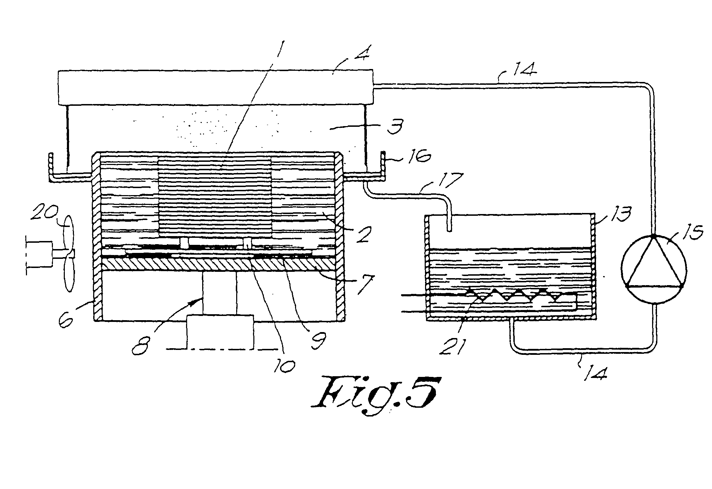

In order to form a subsequent layer, the bottom 7 of the. vessel 6 is moved downward according to the invention over a distance which is equal to the thickness of the new layer to be formed, as is schematically represented in figure 2. Before, during or after said movement, the casting head 4 is moved from one side to the other, while a liquid medium is pumped through the pump 15 from the reservoir 13 via the pipe 14 in the pressure distribution chamber 11 and flows out through the slot 12 in the form of a stable curtain 3, as is represented in figure 3.

The width of the curtain 3 and the speed at which the casting bob 3 is moved over the vessel 6 is selected such that the curtain 3 meets the following stability criterion:

$$p.u^2t = 2T$$

The medium is hereby pressed out of the slot 12 under a pressure of for example between 5 and 20 bar and with a minimum volume flow per unit width Q/b which is equal to the square root of 2T.t/p.

For both equations:

p = the specific gravity of the liquid medium (kg/m$^3$)
u = the speed of the liquid in the curtain (m/s)
t = the width of the curtain (m)
T = the surface tension of the liquid medium (N/m).

The to and fro movement of the casting bob 4 is bigger than the dimensions of the vessel 6 in the direction of movement, whereas the slot 12 in the casting bob 4 is longer than the dimensions of the vessel 6 in the longitudinal direction of the slot 12, so that the curtain 3 does not only apply a new layer on the already hardened layer of the object 1, but also on the surrounding surface of the medium 2 in the vessel 6.

Medium which is spilled outside the vessel 6 is collected in the receptacle 16 and flows back to the reservoir 13.

Figures 3 and 4 show the situation during and after the application of the new layer respectively.

In the final stage, the laser beam source 18 is moved according to a specific pattern over the new layer by the control unit 19, such that this layer hardens according to this pattern.

This process was or is repeated for all layers, whereby the direction of movement of the casting head 4 is reversed in between two successive layers, and whereby it is moved back into its initial position over the vessel 6.

Once the object 1 is completed, it is taken out of the vessel 6 and the supporting frame 10 is removed.

The supporting character of the medium 2 in the vessel 6 can be enhanced by cooling the medium, for example by blowing cooling air over the vessel 6 by means of a fan 20.

The stability of the curtain 3 can be improved by heating the medium 2 which is cast by the casting head 4, so that among others air bells are avoided in the curtain. This can be done by erecting heating means 21, for example an electrical resistance, in the reservoir 13.

The control unit 19 does not only control the above-mentioned means to move the laser beam source 18, but also the means 8 to move the bottom 7 and the piston mechanism 5 which moves the casting head 4 and possibly the pump 15.

After one or several layers have been applied, the thickness of the applied layer is measured, and, depending on the measured thickness, the quantity of medium which the casting head 4 applies on the preceding layer during a movement, and thus the thickness of the new layer, is adjusted if necessary. This is possible by influencing the pump 15 and thus by changing the delivery or by controlling the piston mechanism 5 and thus by adjusting the speed of the casting head 4.

On the basis of measurements of an applied layer and by influencing the laser beam source 18 and its movement, the hardening parameters and the hardening depth of a new layer can also be adjusted if required, such that successive layers adhere strongly to one another.

The above-described working method does not only allow to manufacture the object 1 relatively fast, it also makes it possible to build the supporting frame 10 in a more simple manner, since no lateral forces are exerted on the already formed part of the object 1 by a scraper or such.

In which manner the device and in particular the part thereof with which a layer of the liquid medium 2 can be cast are built in practice is represented in figures 6 to 11, in which elements which coincide with the above-mentioned elements are indicated with corresponding figures of reference.

The casting head 4 is composed of two parts 24 and 25 which are fixed to one another by means of a sealing 26, whereby the sealing extends along the edges, except on the bottom side of the casting head, so that the sloe 12 is formed on the bottom side between the parts 24 and 25. The pressure distribution chamber 11 is formed of a cavity in the part 25 and inside the sealing 26. The part 25 is provided with an entry 27 in its wall, opening into the cavity, onto which the pipe 14 is connected.

The vessel 6 is cylindrical, whereas the receptacle 16 has the shape of a dish.

In order to prevent that during the movement of the casting head 4, when the curtain 3 suddenly makes contact with the vessel 6, the stability of said curtain 3 is threatened, a horizontal auxiliary panel 28 is erected against or near the top edge of the vessel 6, above the receptacle 16.

In order to improve the stability of the curtain 3, two downward hanging guiding edges 29 for the guiding of the curtain 3 are fixed to the casting head 4, as is represented in detail in the figures 7 to 11.

Without these guiding edges 29, due to the surface tension of the liquid medium 2, the curtain 3 will be immediately constricted when it leaves the slot 12, as is represented by means of a dashed line in figure 7.

Thanks to the guiding edges 29 on or near the edges of the curtain 3, such constriction is prevented. Thanks to the adhesion of the medium to the guiding edges 29, the surface tension is neutralized and thus is obtained an even curtain.

These guiding edges 29, which thus guide the edges of the curtain 3, can be situated at the ends of the slot 12, as is represented in figures 6 and 7.

Preferably however, the guiding edges 29 are provided at a short distance from the ends of the slot 12 so as to prevent the curtain 3 from coming loose. In this case, it is easier for the guiding edges 29 to be moistened by the outflowing medium, and the adhesion between the medium and the guiding edges 29 will be better.

In order to further improve the stability of the curtain 3, the lower ends of the guiding edges 29 can be folded inward, as is represented in figure 9.

Another possibility to improve the stability of the curtain 3 consists in fixing one or several extra guiding slips 30 between the guiding edges 29 which point downward in the curtain 3, as is represented in figure 10.

The best stability is obtained with guiding edges 29 which practically have the form of the natural curtain 3, i.e. the curtain 3 in case no guiding edges 29 are present, and which thus bend towards one another, as is represented in figure 11.

The present invention is by no means limited to the above-described embodiments as represented in the accompanying drawings; on the contrary, such a method and device for making a three-dimensional object can be made in all sorts of variants while still remaining within the scope of the invention.

In particular, the invention is not limited to stereolithography. It can also be applied to other generally called rapid prototyping processes.

**Claims**

1. Method for making a three-dimensional object from a hardenable liquid medium, whereby the object is built up layer per layer by each time providing a layer of liquid medium (2) on a support and/or an already formed part of the object (1) inside a vessel containing liquid medium and subsequently hardening said layer according to a specific pattern before a subsequent layer is formed in the same manner, whereby the successive layers of liquid medium (2) are provided through a slot in a casting head (4) and thus in the form of a curtain (3) which is moved in a relative manner in relation to the support or an already hardened layer, characterized in that the liquid medium (2) is applied in the form of a stable curtain (3) which meets the following stability criterion:

$$p.u^2 t = 2T$$

whereby

    $p$ = the specific gravity of the liquid medium (kg/m$^3$)
    $u$ = the speed of the liquid in the curtain (m/s)
    $t$ = the width of the curtain (m)
    $T$ = the surface tension of the liquid medium (N/m),

and
with a minimum volume flow per unit width Q/b which is equal to the square root of 2T.t/p, whereby

    $p$ = the specific gravity of the liquid medium (kg/m$^3$)
    $t$ = the width of the curtain (m)
    $T$ = the surface tension of the liquid medium (N/m),

by pumping liquid medium (2) out of a reservoir into the casting head (4) and by pressing the liquid medium (2) through the slot (12) under a pressure between 5 and 20 bar, while the casting head (4) and the vessel (6) are moved one with respect to the other in such way that the curtain (3) does not only put a layer of the required thickness on the support or the already formed layer, but also a layer on the entire surface of the medium (2) which surrounds the support or said formed layer in the vessel (6), whereby the distance between the casting head (4) and the last formed layer is set by moving the bottom (7) of the vessel (6) with the already formed part of the object (1) over a distance equal to the thickness of the new layer to be formed.

2. Method according to claim 1, characterized in that the liquid medium (2) which is provided in the form of a curtain (3) is heated.

3. Method according to claim 1 or 2 characterized in that said medium (2) contained in the vessel (6) is cooled.

4. Method according to any of the preceding claims, characterized in that the thickness of a provided layer is measured and in that the formation of the curtain (3) as a function thereof is controlled such that a subsequent layer has the required thickness.

5. Device for making a three-dimensional object from a hardenable liquid medium, which device contains a vessel (6) filled with a hardenable liquid medium (2) and controllable means (18) which can be provided on top of this vessel (6) to make a layer of liquid medium harden according to a specific pattern, which means contain a casting head (4) which is movable above the vessel (6) and is provided with a slot (12) at the bottom, and means (5) to move said casting head (4) in a relative manner over the surface of the medium (2) contained in the vessel (6), characterized in that the casting head (4) contains a pressure distribution chamber (11) onto which the slot (12) is connected, and in that the vessel (6) has a movable bottom (7), and in that the device contains means (8) to move this bottom (7) and a separate reservoir (13) with liquid medium (2) which is connected to the casting head (4) via a pipe (14).

6. Device according to claim 5, characterized in that at least two guiding edges (29) are provided on the casting head (4) which extend downward near the ends of the slot (12) so as to guide the edges of the curtain (3).

7. Device according to claim 6, characterized in that it contains extra guiding slips (30) between the guiding edges (29) which guide the curtain (3).

8. Device according to any of claims 5 to 7, characterized in that the vessel (6) extends with its top edge through a horizontal plate (28).

**Patentansprüche**

1. Verfahren zur Herstellung eines dreidimensionalen Gegenstandes aus einer härtbaren Flüssigkeit, wobei der Gegenstand schichtweise aufgebaut wird, indem jedes mal eine Schicht aus Flüssigkeit (2) auf einem Träger und/oder einen bereits gebildeten Teil des Gegenstandes (1) in einem die Flüssigkeit enthaltenden Behälter aufgetragen wird und anschließend diese Schicht gemäß einem bestimmten Muster gehärtet wird, bevor eine weitere Schicht in der gleichen Weise gebildet wird, wobei die aufeinanderfolgenden Schichten der Flüssigkeit (2) durch eine Öffnung in einem Gießkopf (4) und folglich in der Form eines Vorhangs, der sich in Bezug zu dem Träger oder einer bereits erhärteten Schicht bewegt, aufgetragen wird, dadurch gekennzeichnet, dass die Flüssigkeit (2) in der Form eines stabilen Vorhangs (3) aufgetragen wird, der das folgende Stabilitätskriterium erfüllt:

$$p.u^2\,t = 2T$$

wobei

p = das spezifische Gewicht der Flüssigkeit ist $(kg/m^3)$,

u = die Geschwindigkeit der Flüssigkeit im Vorhang ist (m/s),

t = die Breite des Vorhangs ist (m),

T = die Oberflächenspannung der Flüssigkeit ist (N/m),

und

mit einem minimalen Volumenfluss pro Einheitsbreite Q/b, die gleich der Quadratwurzel von 2T.t/p ist,

wobei

p = das spezifische Gewicht der Flüssigkeit ist $(kg/m^3)$,

t = die Breite des Vorhangs ist (m),

T = die Oberflächenspannung der Flüssigkeit ist (N/m),

indem Flüssigkeit (2) aus einem Becken in den Gießkopf (4) gepumpt und bei einem Druck zwischen 5 und 20 bar durch die Öffnung (12) gepresst wird, während der Gießkopf (4) und der Behälter (6) in einem solchen Verhältnis zueinander bewegt werden, dass der Vorhang (3) nicht nur eine Schicht der erforderlichen Dicke auf den Träger oder die bereits gebildete Schicht sondern auch eine Schicht auf die gesamte Oberfläche der Flüssigkeit (2), die den Träger oder die bereits gebildete Schicht in dem Behälter (6) umgibt, legt, wobei die Entfernung zwischen dem Gießkopf (4) und der zuletzt gebildeten Schicht dadurch bestimmt wird, dass der Boden (7) des Behälters (6) mit dem bereits gebildeten Teil des Gegenstandes (1) über eine Entfernung gleich der Stärke der neu zu bildenden Schicht bewegt wird.

2. Verfahren gemäß Anspruch 1, dadurch gekennzeichnet, dass die Flüssigkeit (2), die in der Form eines Vorhangs (3) bereitgestellt wird, erhitzt wird.

3. Verfahren gemäß Anspruch 1 oder 2, dadurch gekennzeichnet, dass die im Behälter (6) enthaltene Flüssigkeit (2) gekühlt wird.

4. Verfahren gemäß einem der vorgenannten Ansprüche, dadurch gekennzeichnet, dass die Stärke einer bereitgestellten Schicht gemessen wird und dass die Bildung des Vorhangs (3) in Abhängigkeit davon so gesteuert wird, dass eine nachfolgende Schicht die gewünschte Dicke aufweist.

5. Vorrichtung zur Herstellung eines dreidimensionalen Gegenstandes aus einer härtbaren Flüssigkeit, wobei diese Vorrichtung einen mit einer härtbaren Flüssigkeit (2) gefüllten Behälter (6) und steuerbare Elemente (18) enthält, die auf diesem Behälter (6) vorgesehen werden können, um eine Schicht der Flüssigkeit gemäß einem bestimmten Muster zu härten, wobei diese Elemente aus einem Gießkopf (4), der über dem Behälter (6) beweglich ist und unten mit einer Öffnung (12) versehen ist, und Mitteln (5) um diesen Gießkopf (4) relativ über der Oberfläche der in dem Behälter (6) befindlichen Flüssigkeit (2) zu bewegen, bestehen, dadurch gekennzeichnet, dass der Gießkopf (4) eine Druckverteilungskammer (11) enthält, an welche die Öffnung (12) angeschlossen ist, dass der Behälter (6) einen beweglichen Boden (7) aufweist, und dass die Vorrichtung Mittel (8) zum Bewegen dieses Bodens (7) und ein separates Becken (13) mit Flüssigkeit (2), das über ein Rohr (14) mit dem Gießkopf (4) verbunden ist, aufweist.

6. Vorrichtung gemäß Anspruch 5, dadurch gekennzeichnet, dass an dem Gießkopf (4) mindestens zwei Führungsschienen (29) vorgesehen sind, die sich nach unten bis nahe zu den Enden der Öffnung (12) erstrecken, um die Ränder des Vorhangs (3) zu führen.

7. Vorrichtung gemäß Anspruch 6, dadurch gekennzeichnet, dass diese zwischen den Führungsschienen (29), die den Vorhang (3) führen, extra Führungsslips (30) aufweist.

8. Vorrichtung gemäß einem der Ansprüche 5 bis 7, dadurch gekennzeichnet, dass sich der Behälter (6) mit seinem oberen Rand durch eine waagrechte Platte (28) erstreckt.

**Revendications**

1. Procédé pour fabriquer un objet en trois dimensions à partir d'un milieu liquide durcissable, par lequel l'objet est réalisé à l'aide d'une superposition couche par couche, en procurant chaque fois une couche de milieu liquide (2) sur un support et/ou sur une partie de l'objet (1) déjà formée à l'intérieur d'un récipient contenant un milieu liquide et en durcissant par la suite ladite couche conformément à un modèle spécifique avant de former une couche suivante de la même manière, par lequel les couches successives de milieu liquide (2) sont réalisées à travers une fente pratiquée dans une tête de moulage (4) et par conséquent sous la forme d'un rideau (3) qui se déplace par rapport au support ou par rapport à une couche déjà durcie, caractérisé en ce que le milieu liquide (2) est appliqué sous la forme d'un rideau stable (3) qui répond aux critères de stabilité ci-après :

$$p.u^2 t = 2T,$$

formule dans laquelle

p représente le poids volumique du milieu liquide (kg/m$^3$)

u représente la vitesse du liquide dans le rideau (m/s),

t représente la largeur du rideau (m),

T représente la tension superficielle du milieu liquide (N/m), et

avec un écoulement volumique minimal par unité de largeur q/b qui est égal à la racine carrée de 2T. t/p,

formule dans laquelle

p représente la masse volumique du milieu liquide (kg/m$^3$),

t représente la largeur du rideau (m),

T représente la tension superficielle du milieu liquide (N/m),

en pompant le milieu liquide (2) hors d'un réservoir dans la tête de moulage (4) et en pressant le milieu liquide (2) à travers la fente (12) sous une pression entre 5 et 20 bar, tandis que la tête de moulage (4) et le récipient (6) se déplacent l'un par rapport à l'autre, de telle sorte que le rideau (3) non seulement dépose une couche d'épaisseur requise sur le support ou sur la couche déjà formée, mais également une couche sur la surface totale du milieu (2) qui entoure le support ou ladite couche formée dans le récipient (6), la distance entre la tête de moulage (4) et la dernière couche formée étant réglée en déplaçant le fond (7) du récipient (6) avec la partie déjà formée de l'objet (1) sur une distance égale à l'épaisseur de la nouvelle couche à former.

2. Procédé selon la revendication 1, caractérisé en ce que le milieu liquide (2) qui est réalisé sous la forme d'un rideau (3) est chauffé.

3. Procédé selon la revendication 1 ou 2, caractérisé en ce que ledit milieu (2) contenu dans le récipient (6) est refroidi.

4. Procédé selon l'une quelconque des revendications précédentes, caractérisé en ce que l'épaisseur d'une couche réalisée est mesurée et en ce que la formation du rideau (3) est réglée en fonction de cette dernière de telle sorte qu'une couche supérieure possède l'épaisseur requise.

5. Dispositif pour fabriquer un objet en trois dimensions à partir d'un milieu liquide durcissable, ledit dispositif contenant un récipient (6) rempli avec un milieu liquide durcissable (2) et un moyen réglable (18) qui peut être prévu par-dessus ce récipient (6) pour réaliser une couche de milieu liquide durci conformément à un modèle spécifique, ledit moyen contenant une tête de moulage (4) qui est mobile par-dessus le récipient (6) et qui est munie d'une fente (12) dans sa partie inférieure, et un moyen (5) pour déplacer ladite tête de moulage (4) par rapport à la surface du milieu (2) contenu dans le récipient (6), caractérisé en ce que la tête de moulage (4) contient une chambre de distribution sous pression (11) à laquelle est raccordée la fente (12), et en ce que le récipient (6) possède un fond mobile (7), et en ce que le dispositif contient un moyen (8) pour déplacer ce fond (7) et un réservoir séparé (13) avec un milieu liquide (2) qui est relié à la tête de moulage (4) via un conduit (14).

6.  Dispositif selon la revendication 5, caractérisé en ce qu'on prévoit au moins deux bords de guidage (29) sur la tête de moulage (4) qui s'étendent vers le bas à proximité, des extrémités de la fente (12) de façon à guider les bords du rideau (3).

7.  Dispositif selon la revendication 6, caractérisé en ce qu'il contient des glissières de guidage supplémentaires (30) entre les bords de guidage (29), qui guident le rideau (3).

8.  Dispositif selon l'une quelconque des revendications 5 à 7, caractérisé en ce que le récipient (6) s'étend avec son bord supérieur à travers une plaque horizontale (28).

Fig.1

Fig.2

Fig.3

Fig.4

Fig.5

Fig.6

Fig.7

Fig.8

Fig.9

Fig.10

Fig.11